(19) Europäisches Patentamt
European Patent Office
Office européen des brevets

(11) EP 2 592 947 B1

## (12) EUROPEAN PATENT SPECIFICATION

(45) Date of publication and mention
of the grant of the patent:
**28.06.2017 Bulletin 2017/26**

(21) Application number: **11736045.3**

(22) Date of filing: **15.07.2011**

(51) Int Cl.:
*A23K 40/20* (2016.01)    *A23K 20/163* (2016.01)
*A23K 50/42* (2016.01)

(86) International application number:
**PCT/EP2011/062121**

(87) International publication number:
**WO 2012/007566 (19.01.2012 Gazette 2012/03)**

(54) **FOOD PRODUCT**

NAHRUNGSMITTEL

PRODUIT ALIMENTAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.07.2010 GB 201011983**

(43) Date of publication of application:
**22.05.2013 Bulletin 2013/21**

(73) Proprietor: **Mars, Incorporated
McLean, VA 22101 (US)**

(72) Inventors:
• **HEWSON-HUGHES, Adrian
Melton Mowbray Leicestershire LE14 4RT (GB)**

• **LEAVESLEY, Craig
Melton Mowbray Leicestershire LE14 4RT (GB)**
• **HALL, Simon Reginald
Leicestershire LE14 4RT (GB)**

(74) Representative: **Care, Alison et al
Kilburn & Strode LLP
20 Red Lion Street
London WC1R 4PJ (GB)**

(56) References cited:
**EP-A1- 1 911 463      US-A1- 2001 043 983
US-A1- 2003 138 547      US-A1- 2006 127 529**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention, according to claims 1 to 9, relates to a nutritionally complete dry pet food product comprising at least 45% carbohydrate on an energy ratio basis for use in a method of controlling calorie intake in a feline companion animal. The invention specifically relates to such a food product for weight maintenance after surgical procedure to neuter a feline companion animal, according to claim 1, and also to the food product for use in a weight loss regime. It also relates to a pet food for use in a method of controlling calorie intake in a feline companion animal, the method comprising feeding to the feline companion animal a pet food product comprising at least 45% carbohydrate on an energy ratio basis.

Establishing the nutritional priorities that govern foraging behaviour, diet selection and postingestive processing is fundamental to predicting an animal's interactions within its nutritional environment, with consequences that extend from the health and evolutionary fitness of the individual to the structuring of populations and communities. Conventional models have assumed that animals typically prioritize a single food component, usually energy, nitrogen or toxins. However, experimental studies on herbivores and omnivores across a wide range of taxa have shown that animal nutrition can better be understood in terms of balancing multiple nutritional and non-nutritional components of foods. This is predictable in theory since such animals experience a range of food types and qualities, in which nutritional components need not be tightly correlated, necessitating separate regulation of key nutrient dimensions. In contrast, the prevailing view until recently was that predators have no need to regulate intake of multiple nutrients, but are mainly limited by food availability. This assumption is founded on the premise that predators feed on relatively rare, high-quality foods that are less variable in composition than the foods of herbivores and omnivores. In recent years, however, this view of predator nutritional ecology has been called into question.

Establishing whether predators can regulate their intake of multiple nutrients is a fundamental issue for nutritional ecology, but it is especially important to understand the regulatory capacities of domestic pets such as cats, since the diet of the animal is largely determined by the carer. Providing inappropriate diet compositions has implication for animal health and welfare, and potentially also for urban ecology through pets supplementing their diet from nature. There are additional implications for understanding the evolution of nutritional biology under artificial selection.

Results from earlier studies on the domestic cat, *Felis catus*, have been ambiguous. A lack of regulation of protein intake in cats offered pairwise combinations of foods differing in protein content has been claimed. On the other hand, cats were reported to distinguish between foods based on the concentration of methionine. It has also been concluded that cats are unlikely to show nutrient-specific food selection, but instead to use general mechanisms, such as neophilia and xenophobia, to avoid nutritional imbalances.

The inventors have surprisingly found that through an extensive series of dietary studies on the domestic cat, based upon geometric multivariate analysis of the interactions between protein, fat and carbohydrate, animals show strong nutritional regulation. This reinforces the fact that macronutrient regulation is common across tropic levels and providing important information for the design of domestic cat nutritional regimes.

The number of overweight companion animals has become a greater problem in recent years. Being overweight, as in humans, has serious implications for the health of animals and also places a greater burden on veterinary services. Disorders related to an animal being overweight includes diabetes, joint problems and other direct and indirect discomfort for an animal. Many pet owners unintentionally overfeed their animals and many animals will overeat since their instinct is to eat as much as possible when food is available in preparation for times of starvation. However, as domestic animals, those times of starvation do not occur, often causing the animal to gain weight.

Additionally, it is known that after neutering, cats often have increased appetite and a reduced metabolic rate, which also contribute to weight gain.

The present invention is useful in preventing a companion animal from overeating since the inventors have surprisingly discovered that a companion animal will sacrifice calorie intake in order to avoid ingesting more than a certain level of carbohydrate, i.e. the animal will stop eating once it reaches a "carbohydrate ceiling". Accordingly, the present invention provides a nutritionally complete dry pet food product comprising at least 45% carbohydrate on an energy ratio basis for use in a method of controlling calorie intake for weight maintenance after a surgical procedure for neutering a feline companion animal, preferably the pet food product comprises at least 50% carbohydrate on an energy ratio basis.

The food product of the invention allows the feline animal to "self select" the amount of food it consumes. The inventors have unexpectedly found that cats will stop eating once a certain level of carbohydrate has been consumed.

The pet food product may be fed to a companion animal for a limited period of time, or in the case of a particularly sedentary animal, may be used as a permanent diet. The inventors have unexpectedly found that a feline companion animal reduces its calorie intake by up to 40% when fed a food product according to the present invention. Over a period of time this would be likely to lead to weight loss. However, for a cat that is not active, for example an older cat, or a house cat, such diet may be used as a permanent diet. The pet food product may be fed to a feline companion animal for up to 6 months or for 8 to 20 weeks. The food product of the present invention is used for weight maintenance after a surgical procedure for neutering a feline companion animal.

The food product of the present invention may be used in conjunction with an additional calorie intake controlling method or ingredient, such as the use of a bulking agent, such as a non-digestable fibre or carbohydrate. The bulking agent or the like may be included in the food product of the invention or may be provided to the feline animal separately.

The pet food product is nutritionally complete and therefore contains fat and protein as well as the carbohydrate. All necessary micronutrients are also included in the food product at the correct concentrations. The fat and protein may be present in any level provided the carbohydrate remains at at least 50% on an energy ratio basis.

The fat content may be from 1% to 50% on an energy ratio basis, and the protein content may be from 1% to 50% on an energy ratio basis.

Dry food includes food having 5% to 15% moisture, often presented as small biscuit-like kibbles.

The food product encompasses any product that an animal consumes in its diet. Thus, the food product may include the standard food products as well as food products for companion animals, such as food snacks (for example snack bars, cereal bars, snacks, treats, biscuits and sweet products). The food product may be a cooked product. It may incorporate meat or animal-derived material (such as beef, chicken, turkey, lamb, fist, blood plasma, marrowbone, etc or one or more thereof). Alternatively the food product may be meat-free (preferably including a meat substitute such as soya, maize gluten or a soya product) in order to provide protein. The food product may contain additional protein sources such as soya protein concentrate, milk, protein, gluten, etc. The food product may also contain starch, such as one or more grains (e.g. wheat, corn, rice, oats, barley, etc) or may be starch-free. The food product may incorporate or be a gelatinised starch matrix. The food product may incorporate one or more types of fibre such as sugar beet pulp, chicory pulp, chicory, coconut endosperm fibre, wheat fibre etc. Dairy products, such as those incorporating a cream or a cheese sauce, may be suitable. The food product can also be newly designed products currently not available. The most suitable food product may be a pet food product as described herein which is sold as a pet food, in particular a pet food for a domestic dog or a domestic cat. A dry format includes dried ready-to-eat cereal products (often referred to as kibbles). The food product is preferably packaged. In this way the consumer is able to identify, from the packaging, the ingredients of the product and confirm that it is suitable for the particular animal in question. The packaging may be metal (usually in the form of a tin or flexifoil), plastic (usually in the form of a pouch or bottle), paper or card. The amount of moisture in any product may influence the type of packaging, which can be used or is required. The food product may be available as a "kit" or "pack" wherein the different food products are individually packaged and these packages are somehow joined together, for example in a box and/or with overarching packaging for the two or more packages of food product. The "kit" may include snacks or treats as part of the controlling of calorie intake. The "kit" may comprise a "weekly" diet for a feline animal. By weekly it is meant enough food product or products to provide the animal with 7 days of meals, snacks and/or treats.

The pet food product of the invention may be fed to a companion animal as its normal diet on a permanent basis. Alternatively, the pet food product may be used in a weight loss regime for overweight cats. By weight loss regime it is meant a period of time wherein the feline companion animal is fed the food product of the invention in order to reduce its calorie intake with the aim of reducing its weight from an overweight level to a normal level. By normal level it is meant a weight that is suitable and recommended for that animal.

Preferably, the feline companion animal is *Felis catus*.

Controlling calorie intake may be a reduction of calorie intake. The level of carbohydrate in the food product may be manipulated to accurately control the calorie intake of the feline animal. The higher the carbohydrate content relative to the calorie content of the food, the lower the calorie intake of the feline animal. The level of carbohydrate may be reduced (provided it is still at least 45% on an energy ratio basis) to ensure a feline animal consumes enough calories to maintain its weight, but does not consume excess calories. Such a maintenance diet would be fed to a feline animal on a permanent or long term basis. By long term it is meant more than 6 months, for example 12 months, 2 years, 5 years, 10 years, or for the rest of the life of the feline animal. Alternatively the level of carbohydrate could be increased such that the feline animal consumes fewer calories in order to reduce its weight.

A second aspect of the present invention also includes a method of controlling calorie intake in a feline companion animal, the method comprising the steps of feeding to the companion animal a nutritionally complete dry pet food product, comprising at least 45% carbohydrate on an energy ratio basis. The method may involve feeding the feline animal the food product for up to 6 months, or for 8 to 20 weeks. All features of the first aspect apply to the second aspect *mutates mutandis*.

The invention will now be described with reference to the following non-limiting examples and figures in which:

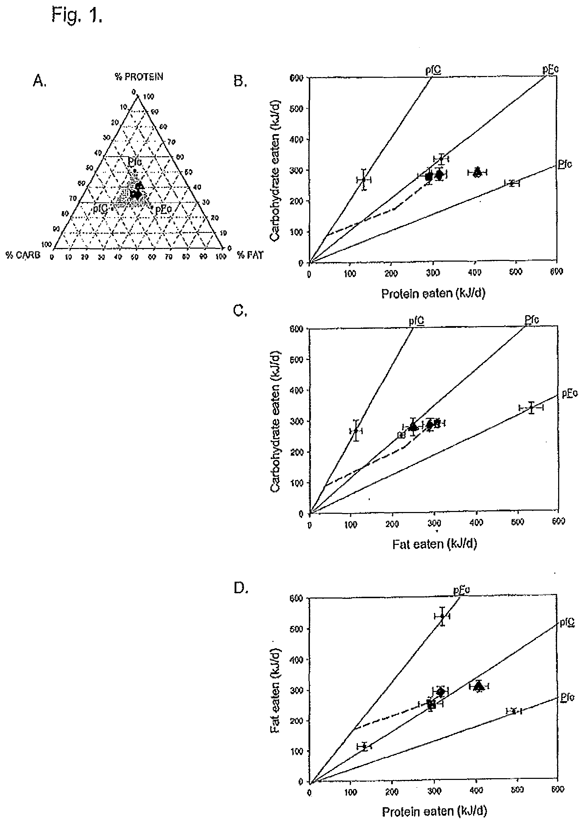

**Figure 1** shows results from Example 1, dry diets with variable protein, carbohydrate and fat content. The square shows the mean diet composition (A) and nutrient intakes (B - D) of naive simultaneous self-selecting cats (Phase 1), while the triange shows the same results for experienced self-selection (Phase 3). Mean diet composition and intakes for sequential self-selection (Phase 2) are shown by the diamond. The solid black lines in B - D represent the two-dimensional nutrient balance of the experimental foods, and hence the trajectory to which the cats were confined when eating the respective foods (i.e. nutrient rails). The small black dots show the average daily intakes of cats confined to the respective foods during the sequential self-selecting stage of the experiment (Phase 2). The intake of each diet was averaged for individual cats across all eight cycles of the phase, and the means of these averages are plotted in the Figure. Therefore, each cat is represented only once for a given diet, and each appears in the means for all three diets. The dashed line shows the intake trajectory compounded over all eight 3-day cycles and all experimental replicates in the sequential self-selection phase (Phase 2) of the experiment. The aim of including this is to show the average relative step size and the contribution it makes to the overall nutrient intake by sequential self-selecting cats (diamond). By convention we have represented the food with the steepest, shallowest and intermediate nutrient rails, respectively, as the sequence of intakes, but in reality the sequence differed among cats. Means and SE are plotted in B - D, with n = 10 cats;

**Figure 2** shows the results from Example 2, The symbols and conventions are as indicated in the caption to Fig. 1, Means and SE are plotted in B - D, with n = 11 cats;

**Figure 3** shows the results from Example 3. The symbols and conventions are as indicated in the caption to Fig. 1. Means and SE are plotted in B - D, with n = 11 cats;

**Figure 4** shows the results from Example 4, dry diets with fixed fat. The symbols and conventions are as for Fig. 1. Means and SE are plotted in B - D, with n = 12 cats;

**Figure 5** shows mean daily food intake (g) for three groups of 7 cats fed either a high carbohydrate (CHO) diet, high protein (PROT) or high fat (FAT) diet for 3 weeks. That the daily intake (g) of the high carbohydrate diet was lower than the other two diets over the 3 week study period can be seen;

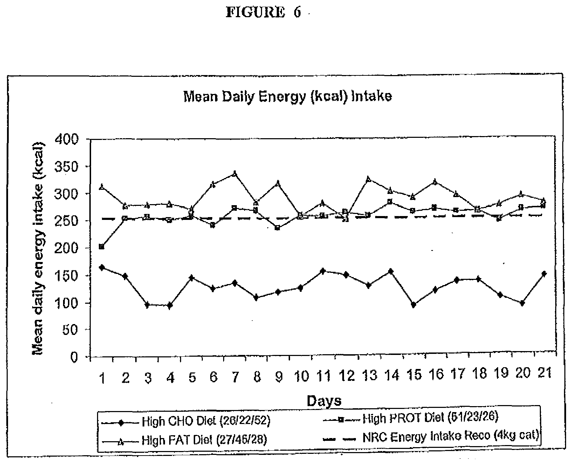

**Figure 6** shows the mean daily energy intake (kcal) for three groups of seven cats fed either a high carbohydrate (CHO) diet, high protein (PROT) or high fat (FAT) diet for 3 weeks. That the daily energy intake (kcal) of the high carbohydrate diet was lower than the other two diets over the 3 week study period can be seen. The mean daily energy intake for cats fed the high carbohydrate diet is also lower than the maintenance energy requirement for adult cats recommended by the National Research Council (NRC 2006) - the dashed line in Figure 6 shows the energy requirement for a 4kg cat (253 kcal) based on the NRC equation: energy requirement = $100 \text{ kcal/kg Bwt}^{0.67}$; and

**Figure 7** shows the daily macronutrient intake of cats fed one of three dry diets - high carbohydrate (pfC), high protein (Pfc) or high fat (pFc) for 21 days. The solid black lines represent the two-dimensional nutrient balance of the diets and hence the trajectory (nutrient rail) the cats were confined to when eating the respective foods. The dashed line in A and B illustrates the 'carbohydrate ceiling' which limits further food intake; and

**Figure** 8 shows the results of statistical analysis.

## EXAMPLES

### Experimental animals, diet compositions and general protocols

Adult, neutered domestic short hair cats (*Felis catus*) of both sexes bred and housed at the WALTHAM Centre for Pet Nutrition, Melton Mowbray, UK participated in the these studies. Throughout each study, the cats were housed individually in purpose-built, behaviorally-enriched lodges (w x d x h: 1.1m x 2.5m x 2.1m) and were socialized as a group for approximately 1 h each day and had access to drinking water at all times. The studies were approved by the WALTHAM Centre for Pet Nutrition Ethical Review Committee.

Six dry-format diets were manufactured using standard processing (extrusion) conditions at Mars Petcare, Germany. These diets were formulated based on Mars Inc. commercial recipes with the inclusion level of poultry metal, maize gluten, ground rice, wheat flour and beef tallow altered to achieve differences in the macronutrient energy ratios of the diets (Table 1).

Detailed experimental designs are given below but in general, each bowl contained 150 g of the allocated diet and the food was available to the cats for 22 h, from 10:30 h to 08:30 h the following morning, at which time any uneaten food was weighed to allow calculation of the amount of each diet eaten.

**Example 1 - Variable protein, carbohydrate and fat**

Twelve neutered adult cats (11 female, 1 male) were allocated to this study although two female cats were removed due to low food intake and loss of body weight and the data were excluded from analysis. Cats (n=10) were aged 3,1 to 6.1 years (mean ± SEM: 3.6 ± 0.3 y) and weighed 4.49 ± 0.26 kg at the start of the study. The experiment had three phases. Phase 1 (naïve cats, simultaneous self-selection): For seven days cats were given three foods simultaneously in three separate bowls from which to self-select a diet: high fat (pFc), high carbohydrate (pfC) and high protein (Pfc). To avoid positional bias, the position of each diet was rotated daily. The proportional protein:carbohydrate:fat compositions of the foods are shown in Fig. 1A as the black points at the corners of the grey triangle. Phase 2 (monadic diets, sequential self selection): cats were cycled through eight, three-day periods in which they were confined to a different food (pFc, pfC or Pfc) on each of the three days. To reduce sequence effects, cats were randomly assigned to one of six orders of diet presentation. They were therefore unable to self-select a diet within each day, but could regulate their intake on successive days so as to compensate for imbalances accrued over previous days. This was, therefore, a sequential self-selection design in which the switching interval was experimentally regulated at one day. Phase 2 also served as a conditioning phase in which the cats gained experience of each of the foods separately. Phase 3 (experienced simultaneous self-selection): In this phase the regime of Phase 1 was repeated (simultaneous self-selection), on the now "experienced" cats. In this experimental design, the cats in all three phases of the experiment could theoretically achieve any diet composition that fell within the region of composition space delineated by the triangle in Fig. 1A.

**Results - Variable protein, carbohydrate and fat**

As can be seen in Fig. 1, the proportional compositions of diets self-selected by cats from all three treatments clustered to the right and midway down the region of the accessible composition space (Fig. 1A). This shows that the cats regulated a macronutrient balance low in carbohydrate and with intermediate protein:fat balance. The clustering of self-selected intakes can also be seen in intake space (Fig. 1B - D). Comparison of nutrient intakes further reveals that the experienced simultaneous self-selectors (Phase 3, triangles) selected a diet with a higher protein:carbohydrate balance (Fig. 1B) and protein:fat balance (Fig. ID) than the naive cats (squares). A striking feature of these plots is that all carbohydrate intake points aligned tightly along a value of approximately 300 kJ d$^{-1}$ (Fig. 1B and C). This suggests that approximately 300 kJ of carbohydrate is either a target level or a maximum tolerable (ceiling) level for the experimental cats. The latter explanation is supported by data presented below.

**Examples 2 - 5**

From Figure 1 (B-D) it can be determined that when cats were confined to the high carbohydrate diet (black dots on the black lines labelled pfC) their total daily energy intake was ~550kJ (132kcal) whilst on the days the cats were fed the high protein (Pfc) and high fat (pFc)diets their energy intakes were ~945kg (226kcal) and 1170kJ (280kcal) respectively.

**Example 2**

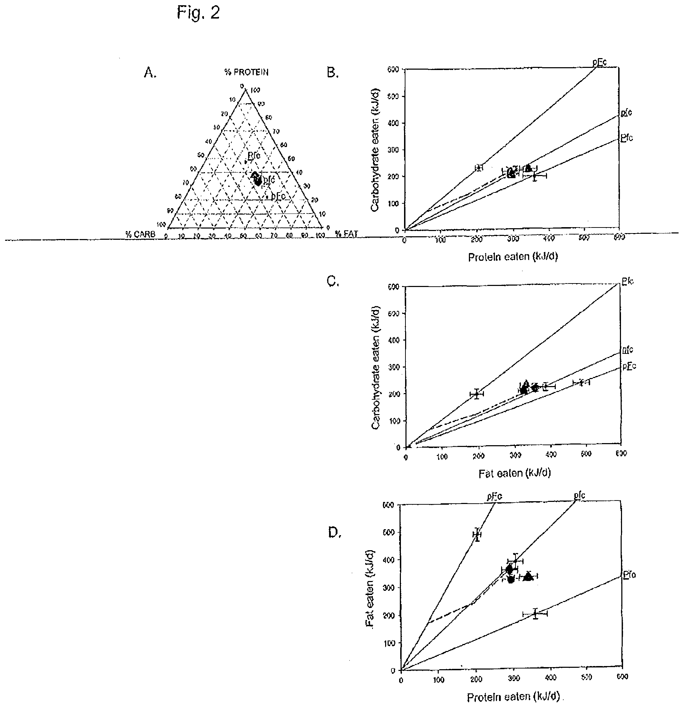

Twelve neutered adult female cats aged 2.0 to 4.1 years (mean ± SEM: 3.5 ± 0.2 y) and weighing 5.04 ± 0.16 kg participated in this study. The design and feeding regimen of this experiment were the same as Experiment 1, except here the high carbohydrate food (pfC) was replaced by food pfc, which had the same level of carbohydrate as Pfc and pFc, but a protein:fat ratio intermediate between these foods. The point representing this food in mixture space lies immediately to the left of the label pfc but is obscured by the diamond in Fig. 2A. In this design the diets self-selected in all three phases were constrained to lie within the narrow grey region delineated by the lines joining the food composition points, rather than the larger triangle of Experiment 1.

**Results**

The proportional compositions of diets self-selected by cats from all three treatments clustered slightly to the high-protein side of the accessible strip in composition space (Fig. 2A). This suggests that when the food carbohydrate content is fixed at approximately 25% the cats regulated a macronutrient intake roughly intermediate in protein:fat balance. Note the similarity in the point selected in this experiment and in Experiment 1. Also similar to Experiment 1 is the tight alignment of intake points on the carbohydrate axis of intake space (Fig. 2B and C). The fact that the cats reached this ceiling even on foods with fixed, relatively low (compared with food pfC) carbohydrate levels of c. 25% demonstrates that 25% exceeds the carbohydrate target proportion for cats (see further below). Unlike Experiment 1, however, there was in this experiment no marked difference between the self-selected point of the naive sand experienced simultaneous self-selecting treatment.

### Example 3

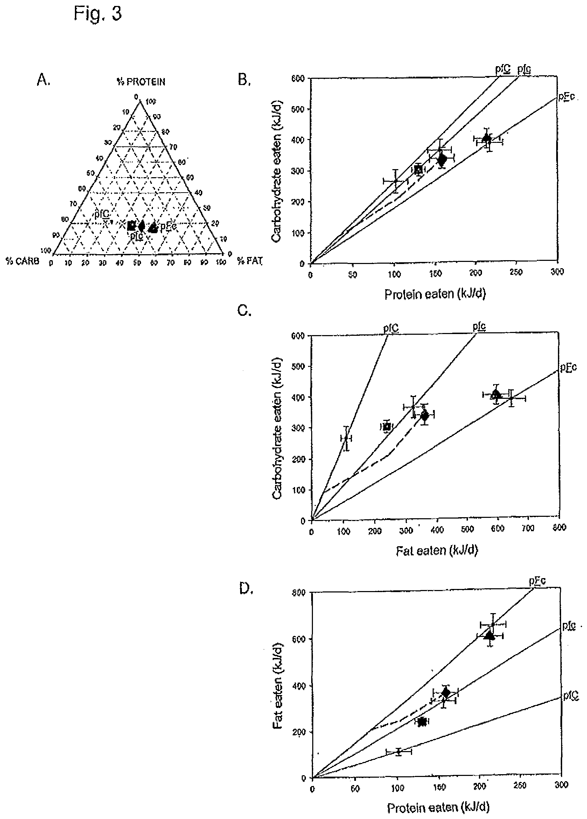

Twelve neutered adult female cats were used, although one was removed due to low food intake and loss of body weight and the data were excluded from analysis. Cats (n=11) were aged 2.3 to 4.4 years (mean $\pm$ SEM: 3.7 $\pm$ 0.2 y) and weighed 5.03 $\pm$ 0.19 kg at the start of the study. The design of this experiment was the same as Experiment 2, except that the three experimental foods had equal protein density but differed in the fat:carbohydrate ratio. Food compositions are shown by the black dots in Fig. 3A.

### Results

As in Experiment 1, the intake points selected by naive (squares) and experienced (triangles) simultaneous self-selectors differed (Fig. 3). In both cases the experienced cats selected a lower proportion of carbohydrate in the diet than the naive cats. The sequential self-selectors compiled a diet intermediate between the diets of naive and experienced simultaneous self-selectors (diamonds). Plots of nutrient intakes again show evidence of a ceiling effect on carbohydrate intake (Fig. 3B and C), although unlike in Experiments 1 and 2 in this case the cats on the pf<u>C</u> monadic diet treatment did not ingest carbohydrate to this level. Comparison of nutrient intakes by naive and experienced simultaneous self-selectors shows that the experienced cats achieved a higher protein intake than naive cats, and in so doing also ingested a larger quantity of carbohydrate (Fig. 3B and C). As a consequence of the putative ceiling on carbohydrate intake, this increase in protein intake could only be achieved by avoiding the high carbohydrate food - i.e. by increasing the proportion of the intermediate- and high fat foods (p<u>fc</u> and pF<u>c</u>) in the diet. In so doing, experienced cats also had increased intake of fat (Fig. 3C and D) and an increase in the fat:protein ratio of the diet (Fig. 3A and D) relative to naive simultaneous self-selecting and sequential self-selecting cats.

### Example 4

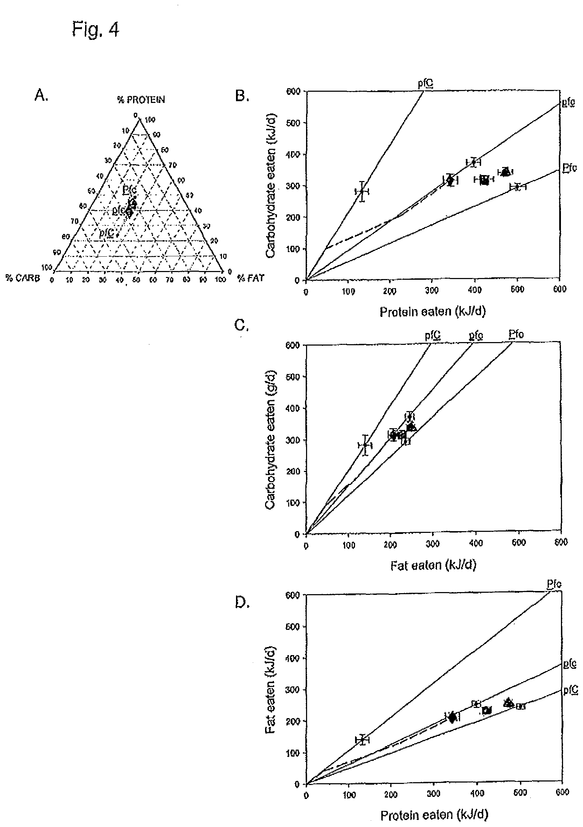

Twelve neutered adult female cats aged 2.4 to 4.5 years (mean $\pm$ SEM: 3.9 $\pm$ 0.2 y) and weighing 4.86 $\pm$ 0.20 kg participated in this study. This experiment had the same design as Experiments 2 and 3, except that the three experimental foods had equal fat density but differed in the protein:carbohydrate ratio. Food compositions are shown by the black dots in Fig. 4A.

### Results

Fig. 4A shows that the naive and experienced simultaneous self-selecting cats mixed a diet with similar macronutrient balance, and that this balance was very close to the maximal P:C possible given the available diets. The diet selected by sequential self-selectors was similar, but had marginally higher carbohydrate content. Fig. 4B - D show, as in previous experiments, that there was a distinct upper limit to carbohydrate intake. In this case both the Pf<u>c</u> and pf<u>c</u> monadic diet treatments and the self-selected intake means also aligned tightly on a value for fat intake of approximately 240 kJ. A possible interpretation of this is that the cats encountered a daily fat intake limit of approximately 240 kJ. This is, however, not true, because Experiments 1, 2 and 3 showed that cats are capable of eating considerably higher levels of fat, in excess of 600 kJ d$^{-1}$. A second interpretation is that 240 kJ d$^{-1}$ represents the target coordinate for daily fat intake.

### Example 5 - Long-term (3 weeks) intake of 3 dry diets with differing macronutrient profiles in cats.

This study was carried out with three groups of 7 adult cats (aged >12 months). Group 1 (4.26 $\pm$ 0.33kg) was fed diet pfC Each group was fed one of the diets shown in Table 1 for a period of 21 days with 90g of food offered to each cat each day.

### Results

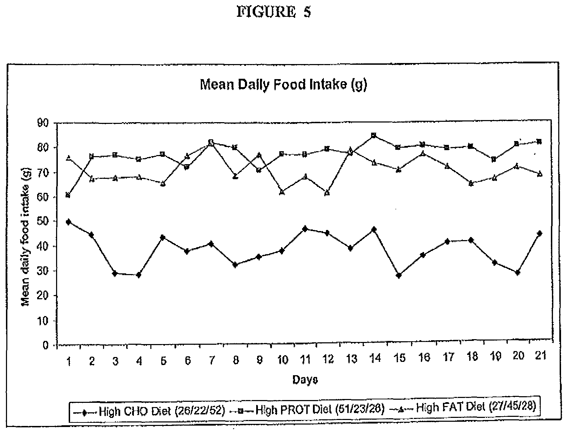

As can be seen in Figure 5, the daily intake (g) of the high carbohydrate diet was lower than that of the other two diets over the 3 week study period. This lower food intake also results in lower energy intake (kcal) of the high carbohydrate diet compared to the other two diets over the 3 week study period (Figure 6). The mean daily energy intake for cats fed the high carbohydrate diet is also lower than the maintenance energy requirement for adult cats recommended by the National Research Council (NRC 2006) - the dashed line in Figure 6 shows the energy requirement for a 4kg cat (253 kcal) based on the NRC equation: energy requirement = 100 kcal/kg Bwt$^{0.67}$.

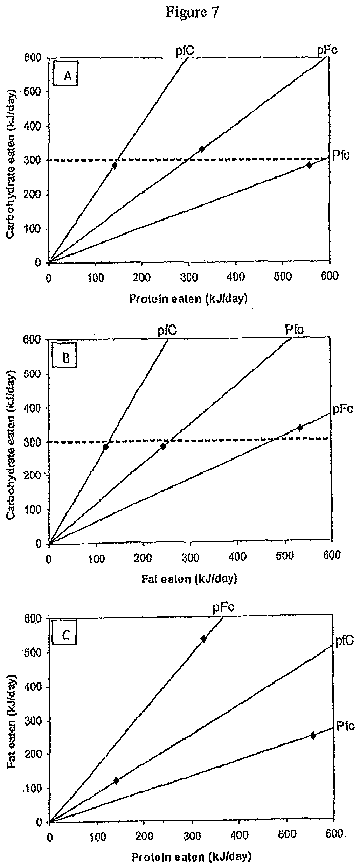

Plotting these data in geometric plots (Figure 7) demonstrates the 'carbohydrate ceiling' effect - a daily limit on food intake when ~300kJ (~72kcal) of carbohydrate has been eaten. Whilst the 'carbohydrate ceiling' of 300kJ was reached on all 3 diets the total calorie intake was very different on each of the diets. Thus, average daily total calorie intake was ~549kJ (130 kcal) for the high carbohydrate diet, 1083kJ (259kcal) for the high protein diet and 1194kJ (285kcal) for the high fat diet. These data are entirely consistent with those from short-term studies with the same diets described in example 1 and shown in Figure 1.

**Effect on bodyweight**

Cats fed the high carbohydrate diet for 3 weeks had an average bodyweight loss of 5.7% compared to their start bodyweight while cats fed the high protein diet had an average gain of 1% and cats fed the high fat diet had an average weight gain of 2.6%.

**The carbohydrate ceiling**

It is clear that carbohydrate provided a ceiling to intake (i.e. a limit at which the cat 'voluntarily' stopped eating) at c. 300 kJ d$^{-1}$ (e.g., see the horizontal alignment of intakes at this value in Fig. 1B and C and Fig. 7A and B).

Table 1. Macronutrient compositions of the diets used in the dry diet experiments

| Study | Diet | PME[1] (MJ/kg) | PER % | FER % | CER % |
|---|---|---|---|---|---|
| 1 and 5 | pfC[2] | 14.39 | 26 | 22 | 52 |
| | Pfc | 14.07 | 51 | 23 | 26 |
| | pFc | 16.91 | 27 | 45 | 28 |
| 2 | Pfc | 14.46 | 48 | 26 | 26 |
| | pFc | 16.35 | 22 | 53 | 25 |
| | pfc | 17.86 | 34 | 42 | 24 |
| 3 | pfC[2] | 14.43 | 21 | 23 | 56 |
| | pfc | 16.34 | 18 | 39 | 43 |
| | pFc | 18.21 | 17 | 52 | 31 |
| 4 | pfC | 14.55 | 24 | 25 | 51 |
| | Pfc | 13.92 | 49 | 23 | 28 |
| | pfc | 14.06 | 39 | 24 | 37 |

PER = protein energy ratio, FER = fat energy ratio and CER = carbohydrate energy ratio. [1]Proximate analysis and modified Atwater factors (protein 14.64 kJ/g, fat 35.56 kJ/g, digestible CHO 14.64 kcal/g) were used to calculate the predicted metabolizable energy (PME) of each diet. [2] Where diets with the same letter descriptors have different energy content and macronutrient profiles this is due to analytical differences between batches of diet made to the same recipe.

**Simple Regression - Intake (kJ) vs. CER**

Dependent variable: Intake (kJ)
Independent variable: CER
Linear model:

$$\text{Linear model: } Y = a + b*X$$

**Coefficients**

| Parameter | Least Squares Estimate | Standard Error | T Statistic | P-Value |
|---|---|---|---|---|
| Intercept | 1442.11 | 164.443 | 8.76969 | 0.0000 |

(continued)

|  | Least Squares | Standard | T |  |
|---|---|---|---|---|
| Parameter | Estimate | Error | Statistic | P-Value |
| Slope | -16.1392 | 4.40265 | 3.66579 | 0.0043 |

**Analysis of Variance**

| Source | Sum of Square | Df | Mean Squire | F-Ratio | P-Value |
|---|---|---|---|---|---|
| Model | 402931, | 1 | 402931. | 13.44 | 0.0043 |
| Residual | 299844. | 10 | 29984.4 |  |  |
| Total (Corr.) | 702775. | 11 |  |  |  |

Correlation Coefficient = -0.757194
R-squared = 57.3342 percent
R-squared (adjusted for d.f.) = 53.0677 percent
Standard Error of Est. = 173.16
Mean absolute error = 134.598
Durbin-Watson statistic = 2.35813 (P=0.6637)
Lag 1 residual autocorrelation = -0.239826

**The StatAdvisor**

The output shows the results of fitting a linear model to describe the relationship between Intake (kJ) and CER. The equation of the fitted model is

$$\text{Intake (kJ)} = 1442.11 - 16.1392 * \text{CER}$$

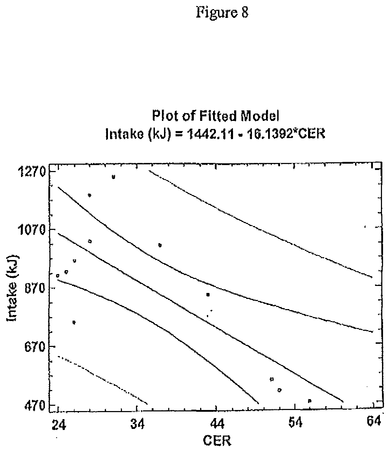

Since the P-value in the ANOVA table is less than 0.05, there is a statistically significant relationship between Intake (kJ) and CER at the 95.0% confidence level.
The R-Squared statistic indicates that the model as fitted explains 57.3342% of the variability in Intake (kJ). The correlation coefficient equals -0.757194, indicating a moderately strong relationship between the variables.
Results are shown in Figure 8.

**Claims**

1. A nutritionally complete dry food product comprising at least 45% carbohydrate on an energy ratio basis for use in controlling calorie intake for weight maintenance after a surgical procedure for neutering a feline companion animal.

2. A pet food product for use according to claim 1, wherein the food product comprises at least 50% carbohydrate on an energy ratio basis.

3. A pet food product for use according to claim 1, wherein the feline animal self selects the amount of food product consumed.

4. A pet food product for use according to claim 1, wherein the pet food product is fed to a companion animal for up to six months.

5. A pet food product for use according to claim 1, wherein the feline companion animal is a low-activity animal and the food product is fed on a long term or permanent basis.

6. A food product for use according to any one of claims 1 to 5 wherein the food product is used in conjunction with an additional method for controlling or reducing calorie intake.

7.  A food product for use according to claim 6, wherein the additional method for controlling or reducing calorie intake is the use of a bulking agent.

8.  A pet food for use in a method of controlling calorie intake for weight maintenance after a surgical procedure for neutering in a feline companion animal, the method comprising feeding to the feline companion animal a pet food product comprising at least 45% carbohydrate on an energy ratio basis, and allowing the feline animal to self select the amount of food product consumed.

9.  The pet food for use according to claim 8, wherein the method is carried out for up to 6 months.


**Patentansprüche**

1.  Ernährungsmäßig vollständiges Trockennahrungsmittel umfassend wenigstens 45% Kohlenhydrat auf einer Energieverhältnisbasis zur Verwendung beim Steuern einer Kalorienaufnahme zur Gewichtsbewahrung nach einem chirurgischen Verfahren nach Kastrieren eines Katzenhaustieres.

2.  Tiernahrungsmittel zur Verwendung nach Anspruch 1, wobei das Nahrungsmittel wenigstens 50% Kohlenhydrat auf einer Energieverhältnisbasis umfasst.

3.  Tiernahrungsmittel zur Verwendung nach Anspruch 1, wobei die Katze selbst die Menge an verbrauchtem Nahrungsmittel auswählt.

4.  Tiernahrungsmittel zur Verwendung nach Anspruch 1, wobei das Tiernahrungsmittel einem Haustier für bis zu 6 Monate gefüttert wird.

5.  Tiernahrungsmittel zur Verwendung nach Anspruch 1, wobei das Katzenhaustier ein Tier mit geringer Aktivität ist und das Nahrungsmittel langzeitig oder auf permanenter Basis gefüttert wird.

6.  Nahrungsmittel zur Verwendung nach einem der Ansprüche 1 bis 5, wobei das Nahrungsmittel in Verbindung mit einem zusätzlichen Verfahren zum Steuern oder Reduzieren einer Kalorienaufnahme verwendet wird.

7.  Nahrungsmittel zur Verwendung nach Anspruch 6, wobei das zusätzliche Verfahren zum Steuern oder Reduzieren einer Kalorienaufnahme die Verwendung eines Blähmittels ist.

8.  Tierfutter zur Verwendung in einem Verfahren zum Steuern einer Kalorienaufnahme zur Gewichtsbewahrung nach einem chirurgischen Verfahren zum Kastrieren bei einem Katzenhaustier, wobei das Verfahren ein Füttern des Katzenhaustieres eines Tiernahrungsmittels umfassend wenigstens 45% Kohlenhydrat auf einer Energieverhältnisbasis und ein Erlauben, dass die Katze selbst die Menge an verbrauchtem Nahrungsmittel auswählt, umfasst.

9.  Tierfutter zur Verwendung nach Anspruch 8, wobei das Verfahren für bis zu 6 Monate durgeführt wird.


**Revendications**

1.  Un produit alimentaire sec, complet sur le plan nutritionnel, comprenant au moins 45% d'hydrates de carbone exprimés sur la base du rapport énergétique, destiné à être utilisé pour contrôler l'apport calorique en vue du maintien du poids après une intervention chirurgicale de stérilisation d'un animal de compagnie de la famille des félidés.

2.  Un produit alimentaire pour animaux de compagnie pour un usage selon la revendication 1, lequel produit alimentaire comprend au moins 50% d'hydrates de carbone, exprimés sur la base du rapport énergétique.

3.  Un produit alimentaire pour animaux de compagnie pour un usage selon la revendication 1, dans lequel le félidé sélectionne lui-même la quantité de produit alimentaire consommée.

4.  Un produit alimentaire pour animaux de compagnie pour un usage selon la revendication 1, lequel produit alimentaire

EP 2 592 947 B1

est fourni à l'animal de compagnie pendant une période pouvant atteindre six mois.

5. Un produit alimentaire pour animaux de compagnie pour un usage selon la revendication 1, lequel animal de compagnie est un félidé étant à activité faible et est alimenté en ledit produit alimentaire sur une base permanente ou sur une longue durée.

6. Un produit alimentaire pour un usage selon l'une quelconque des revendications 1 à 5, lequel produit alimentaire est utilisé en association avec un procédé supplémentaire de contrôle ou réduction de l'apport calorique.

7. Un produit alimentaire pour un usage selon la revendication 6, dans lequel le procédé supplémentaire de contrôle ou réduction de l'apport calorique consiste en l'utilisation d'un agent gonflant.

8. Un produit alimentaire pour animaux de compagnie pour un usage dans un procédé de contrôle de l'apport calorique en vue du maintien du poids après une intervention chirurgicale de stérilisation d'un animal de compagnie de la famille des félidés, le procédé comprenant l'étape consistant à alimenter l'animal de compagnie de la famille des félidés en produit alimentaire pour animaux de compagnie comprenant au moins 45% d'hydrates de carbone exprimés sur la base du rapport énergétique et permettant à l'animal de la famille des félidés de choisir lui-même la quantité de produit alimentaire consommé.

9. Le produit alimentaire pour animaux de compagnie pour un usage selon la revendication 8, dans lequel le procédé est mis en oeuvre pendant une période pouvant atteindre 6 mois.

## Fig. 1.

Fig. 2

Fig. 3

Fig. 4

FIGURE 5

FIGURE 6

Figure 7

Figure 8

## Plot of Fitted Model
### Intake (kJ) = 1442.11 - 16.1392*CER